# EUROPEAN PATENT SPECIFICATION

(11) **EP 4 131 589 B1**
(45) Date of publication and mention of the grant of the patent: **27.08.2025**
(21) Application number: 21886779.4
(22) Date of filing: 27.10.2021
(51) Int. Cl.: H01M 50/116, H01M 50/124, H01M 10/04, H01M 50/105

(54) **SECONDARY BATTERY MANUFACTURING METHOD**
VERFAHREN ZUR HERSTELLUNG EINER SEKUNDÄRBATTERIE
PROCÉDÉ DE FABRICATION DE BATTERIE SECONDAIRE

(30) Priority: 27.10.2020 KR 20200140760
(43) Date of publication of application: 08.02.2023
(73) Proprietor: LG Energy Solution, Ltd., Seoul 07335 (KR)
(72) Inventor: KWON, Hyun Jung, Daejeon 34122 (KR); KIM, Hyun Tae, Daejeon 34122 (KR); PARK, Tae Soon, Daejeon 34122 (KR)
(74) Representative: Plasseraud IP
(86) International application number: PCT/KR2021/015150
(87) International publication number: WO 2022/092785

(56) References cited:
- CN-A- 106 129 481
- CN-U- 204 947 022
- KR-A- 20080 082 799
- KR-A- 20080 082 799
- KR-A- 20170 062 877
- KR-A- 20190 043 251
- US-A1- 2018 102 521
- US-A1- 2020 075 992
- US-B2- 10 790 478

## Description

### TECHNICAL FIELD

The present invention relates to a method for manufacturing a secondary battery.

### BACKGROUND ART

Secondary batteries are rechargeable unlike primarily batteries, and also, the possibility of compact size and high capacity is high. Thus, recently, many studies on secondary batteries are being carried out. As technology development and demands for mobile devices increase, the demands for secondary batteries as energy sources are rapidly increasing.

Rechargeable batteries are classified into coin type batteries, cylindrical type batteries, prismatic type batteries, and pouch type batteries according to a shape of a battery case. In such a secondary battery, an electrode assembly mounted in a battery case is a chargeable and dischargeable power generating device having a structure in which an electrode and a separator are stacked.

Also, the electrode assembly may be approximately classified into a jelly-roll type electrode assembly in which a separator is interposed between a positive electrode and a negative electrode, each of which is provided as the form of a sheet coated with an active material, and then, the positive electrode, the separator, and the negative electrode are wound, a stacked type electrode assembly in which a plurality of positive and negative electrodes with a separator therebetween are sequentially stacked, and a stack/folding type electrode assembly in which stacked type unit cells are wound together with a separation film having a long length.

Recently, the pouch-type battery in which a stack/folding type electrode assembly is built in a pouch-type battery case provided as an aluminum lamination sheet is attracting much attention due to its low manufacturing cost, light weight, easy shape deformation, and the like, and thus, its usage is gradually increasing.

In the case of the L-shaped pouch-type battery, there have been cases in which pouch cracks occur in an L-shape section during pouch forming, and a criterion of a residual amount of aluminum (AL) is not satisfied.

[Prior Art Document] (Patent Document) Korean Patent Publication No. 10-2012-0067550

Document KR 2008 0082799 A discloses a method for manufacturing a pouch for a secondary battery.

### DISCLOSURE OF THE INVENTION

### TECHNICAL PROBLEM

One aspect of the present invention is to provide a method for manufacturing a secondary battery, which is capable of preventing cracks occurring in a bending section when forming from occurring and capable of improving a residual amount of aluminum.

### TECHNICAL SOLUTION

To this end, the invention relates to a manufacturing method according to claim 1.

The manufacturing method after the invention may comprise one or more feature(s) from the dependent claims 2 to 10, in any combination allowed by the claims.

### ADVANTAGEOUS EFFECTS

According to the present invention, when forming the pouch of the pouch-type secondary battery having the bent shape, the arc slit cut may be performed in the section adjacent to the accommodating part having the bent shape in the pouch to relieve the stress generated in the bent-shaped section and improve the residual amount of aluminum.

### BRIEF DESCRIPTION OF THE DRAWINGS

FIG. 1 is a plan view illustrating a cutting process in a method for manufacturing a secondary battery according to an embodiment of the present invention.
FIG. 2 is a plan view illustrating a forming process in the method for manufacturing the secondary battery according to an embodiment of the present invention.
FIG. 3 is a plan view illustrating an accommodating process in a method for manufacturing a secondary battery according to an embodiment of the present invention.
FIG. 4 is a perspective view illustrating a sealing process in the method for manufacturing the secondary battery according to an embodiment of the present invention.
FIG. 5 is a plan view illustrating a first example of a cutting part formed on a pouch in the method for manufacturing the secondary battery according to an embodiment of the present invention.
FIG. 6 is a plan view illustrating a second example of the cutting part formed on the pouch in the method for manufacturing the secondary battery according to an embodiment of the present invention.
FIG. 7 is a plan view illustrating a third example of the cutting part formed on the pouch in the method for manufacturing the secondary battery according to an embodiment of the present invention.
FIG. 8 is a plan view illustrating reference symbols of portions of the pouch that has undergone the cutting process and the forming process in the method for manufacturing the secondary battery according to an embodiment of the present invention.
FIG. 9 is an image illustrating a ratio of thinning at a portion P6 of the pouch illustrated in FIG. 8.

### MODE FOR CARRYING OUT THE INVENTION

The objectives, specific advantages, and novel features of the present invention will become more apparent from the following detailed description taken in conjunction with the accompanying drawings. It should be noted that the reference numerals are added to the components of the drawings in the present specification with the same numerals as possible, even if they are illustrated in other drawings. Also, the present invention may be embodied in different forms and should not be construed as limited to the embodiments set forth herein. In the following description of the present invention, the detailed descriptions of related arts which may unnecessarily obscure the gist of the present invention will be omitted.

### Method for manufacturing secondary battery according to embodiment

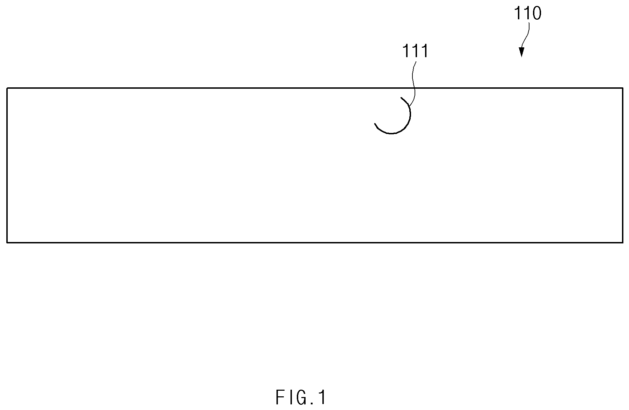

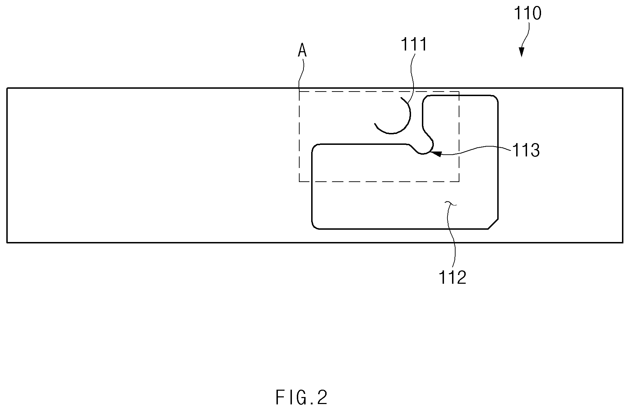

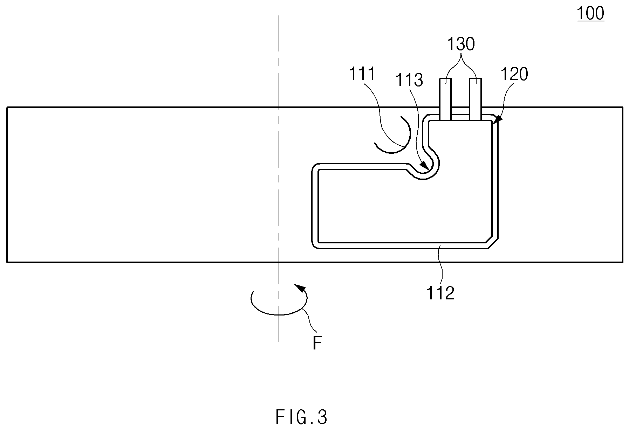

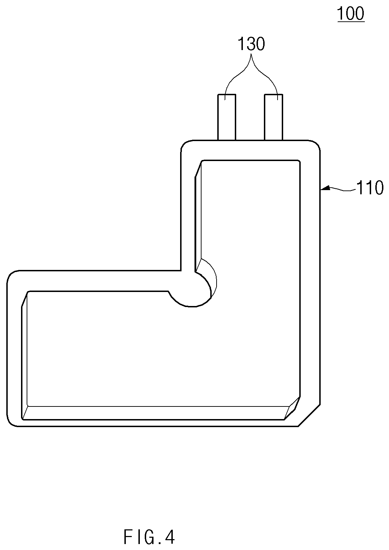

FIG. 1 is a plan view illustrating a cutting process in a method for manufacturing a secondary battery according to an embodiment of the present invention, FIG. 2 is a plan view illustrating a forming process in the method for manufacturing the secondary battery according to an embodiment of the present invention, FIG. 3 is a plan view illustrating an accommodating process in a method for manufacturing a secondary battery according to an embodiment of the present invention, and FIG. 4 is a perspective view illustrating a sealing process in the method for manufacturing the secondary battery according to an embodiment of the present invention.

Referring to FIGS. 1 to 4, a method for manufacturing a secondary battery according to an embodiment of the present invention comprises a forming process of forming an accommodating part 112 in a pouch 110, a cutting process of cutting a portion of the pouch 110 adjacent to an inner corner portion in the accommodating part 112, and an accommodating process of accommodating an electrode assembly 120 into the pouch 110 after the forming process to manufacture a secondary battery 100. In addition, the method for manufacturing the secondary battery according to an embodiment of the present invention may further comprise a sealing process for sealing the pouch 110.

Hereinafter, the method for manufacturing the secondary battery according to an embodiment of the present invention will be described in more detail.

Referring to FIGS. 1 and 2, in the cutting process, a portion of the pouch 110 is slit-cut in an arc shape to form a cutting part 111.

Also, in the cutting process, the cutting part 111 isformed in consideration of a position at which the accommodating part 112 that accommodates the electrode assembly 120 will be formed in a subsequent process. That is, in the cutting process, the cutting part 111 is formed at the portion of the pouch 110 adjacent to the inner corner portion 113 in the bent accommodating part 112.

In addition, in the cutting process, the cutting part 111 may be formed in an arc shape that is convex toward the inner corner portion 113 of the pouch 110 accommodating part 112.

In addition, in the cutting process, the cutting part 111 is formed as an arc-shaped cutting line in the plan view.

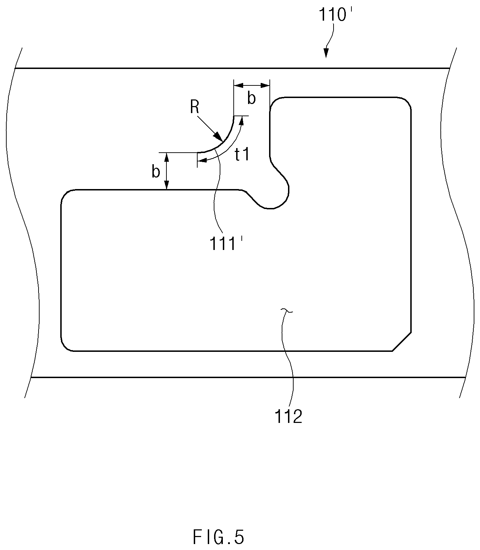

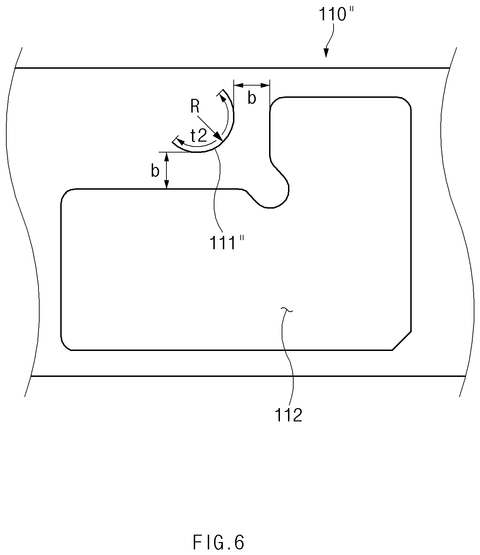

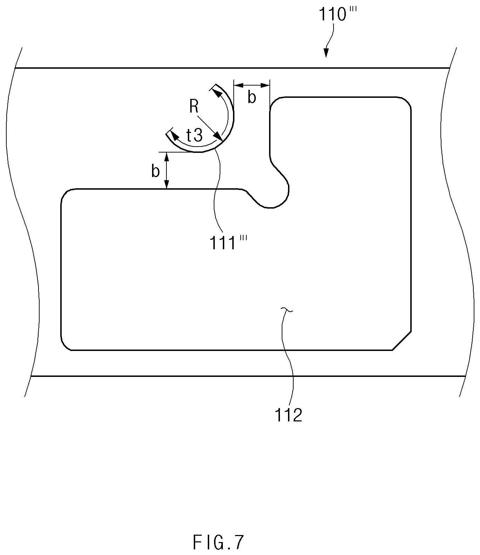

FIG. 5 is a plan view illustrating a first example of the cutting part formed on the pouch in the method for manufacturing the secondary battery according to an embodiment of the present invention, FIG. 6 is a plan view illustrating a second example of the cutting part formed on the pouch in the method for manufacturing the secondary battery according to an embodiment of the present invention, and FIG. 7 is a plan view illustrating a third example of the cutting part formed on the pouch in the method for manufacturing the secondary battery according to an embodiment of the present invention.

Referring to FIGS. 5 to 7, in the cutting process, the arc-shaped cutting line of the cutting part 111 may be formed in an arc shape at an angle, for example, 60° to 285° (degrees) . Here, in the cutting process, the arc-shaped cutting line of the cutting part 111 may be formed at an angle of 60 degrees or more to effectively improve thinning of the pouch, and the cutting line may be formed at an angle of 285 degrees or less to prevent the portion of the pouch 110, which is cut as the arc-shaped cutting line, from being torn or separated, thereby realizing the thinning of the pouch.

Also, In the cutting process, the arc-shaped cutting line of the cutting part 111 may be specifically formed, for example, in an arc shape at an angle of 120 degrees to 210 degrees. Here, in the cutting process, a radius of the arc of the cutting part 111 may be, for example, 4 mm to 12 mm.

More specifically, for example, referring to FIG. 5, in the cutting process, the arc-shaped cutting line of the cutting part 111 may be formed at an angle t1 of 120 degrees as a first example, and referring to FIG. 6, the arc-shaped cutting line of the cutting part 111 may be formed at an angle t2 of 180 degrees as a second example. In addition, referring to FIG. 7, the arc-shaped cutting line of the cutting part 111 may be formed at an angle t3 of 210 degrees as a third example.

In addition, in the cutting process, the cutting part 111 may be formed to be spaced a predetermined interval from the accommodating part 112. That is, in the cutting process, the cutting part 111 may formed to be spaced a predetermined interval from the accommodating part 112 in consideration of a position of the accommodating part 112 to be formed in the subsequent forming process. In this case, in the cutting process, for example, the interval b between the cutting part 111 and the accommodating part 112 may be formed to be 4 mm to 12 mm.

The pouch 110 may comprise an aluminum (Al) material. In this case, for example, the pouch 110 may comprise an aluminum layer and a resin layer.

Referring to FIG. 2, in the forming process, the accommodating part 112 having the bent shape is formed in the pouch 110 to accommodate the bent electrode assembly 120 after the cutting process. Here, the accommodating part 112 may be formed as, for example, a cup-shaped groove. In this case, the accommodating part 112 may be formed in an upwardly opened shape. Here, the 'bent shape' does not mean that the electrode assembly 120 and the accommodating part 112 are bent by external force, but may mean, for example, a vertically extending shape.

Furthermore, in the forming process, the accommodating part 112 may be formed in a shape corresponding to the electrode assembly 120.

In the forming process, for example, the accommodating part 112 may be formed by pressing the pouch 110 from the top to the bottom through a punch.

Here, the electrode assembly 120 may be formed in a shape bent at a right angle. In this case, the electrode assembly 120 may be formed to be bent in an "L" shape.

In addition, in the forming process, the accommodating part 112 may be formed in a shape bent at a right angle. In this case, the forming process, the accommodating part 112 may be formed to be bent in an "L" shape.

In addition, in the forming process, the inner corner portion 113 of the pouch 110 may be formed in a shape that is recessed in a direction of the accommodating part 112 in the plan view. Here, the inner corner portion 113 may be formed, for example, in a shape that is recessed in a round shape. Here, as the arc-shaped cutting part 111 is formed at a distance adjacent to the inner corner portion 113 in the previous cutting process, an occurrence of excessive stress generated when the inner corner portion 113 is formed in a recessed shape in the forming process may be solved to effectively prevent cracks from occurring.

The electrode assembly 120 is a power generating element that is chargeable and dischargeable and forms a structure in which electrodes and separators are combined and alternately stacked.

The electrodes may comprise a positive electrode and a negative electrode. Also, each of the separators separates the positive electrode from the negative electrode to electrically insulate the positive electrode from the negative electrode.

The separator is alternately stacked with the positive electrode and the negative electrode, which are made of insulation materials.

Also, each of the separator 114 may be, for example, a multi-layered film produced by microporous polyethylene, polypropylene, or a combination thereof or a polymer film for solid polymer electrolytes or gel-type polymer electrolytes such as polyvinylidene fluoride, polyethylene oxide, polyacrylonitrile, or polyvinylidene fluoride hexafluoropropylene copolymers.

An electrode lead 130 may be connected to the electrode assembly 120 so as to be electrically connected to the outside. That is, the electrode lead 130 may be connected to the electrode of the electrode assembly 120 to electrically connect the electrode to an external terminal.

Referring to FIG. 3, in the accommodating process, the electrode assembly 120 may be accommodated in the accommodating part 112 of the pouch 110 after the forming process.

In addition, in the accommodating process, an upper portion of the accommodating part 112 in which the electrode assembly 120 is accommodated may be covered. That is, the other side of the pouch 110 may be folded with respect to a folding line F of the pouch 110 to cover the accommodating part 112 formed at one side of the pouch 110 with respect to the folding line F of the pouch 110.

In addition, an inner corner of the electrode assembly 120 may be formed in a shape corresponding to the inner corner portion 113 formed in the recessed shape in the pouch 110. That is, an inner corner portion of the electrode assembly 120 may be formed in a shape corresponding to the inner corner portion 113 formed in the recessed shape of the pouch 110.

Referring to FIG. 4, in the sealing process, an outer circumferential surface of the pouch 110 may be sealed to seal the pouch 110. In this case, in the sealing process, heat may be applied along an edge of the accommodating part 112 of the pouch 110 to form the sealing part.

In addition, the sealing process may comprise a removing process of cutting and removing a portion remaining except for the accommodating part 112 and the sealing part. In this case, in the removing process, the cutting part 111 of the pouch 110 may be removed together.

Referring to FIGS. 1 to 4, in the method for manufacturing the secondary battery according to an embodiment of the present invention, which is configured as described above, when the pouch 110 of the pouch-type battery having the bent shape is formed, arc slit cutting may be performed in a section A adjacent to a portion at which the bent-shaped accommodating part 112 is formed in the pouch 110 to relieve an occurrence of stress generated in the adjacent section A of the bent-shaped accommodating part 112, thereby preventing cracks from occurring and improving a residual amount of aluminum.

Referring to FIG. 4, the secondary battery may be a product manufactured by the method for manufacturing the secondary battery according to the embodiment of the present invention, which is configured as described above.

### <Manufacturing Example 1>

Referring to FIG. 5, a portion of a pouch 110' was slit-cut in an arc shape to form a cutting part 111' to form a bent-shaped accommodating part 112. Here, the cutting part 111' was formed in the portion of the pouch 110' adjacent to an inner corner portion of the bent accommodating part 112. Here, the cutting part 111' was formed in an arc shape having an angle t1 of 120 degrees. The cutting part 111' was formed so that a radius R of the cutting part 111' is 8 mm, and a spaced distance b between the cutting part 111' and the accommodating part 112 is 8 mm.

### <Manufacturing Example 2>

Referring to FIG. 6, the same process as in Manufacturing Example 1 was performed except that an angle t2 of a cutting part 111'' of a pouch 110" is formed in an arc shape having an angle of 180 degrees.

### <Manufacturing Example 3>

Referring to FIG. 7, the same process as in Manufacturing Example 1 was performed except that an angle t3 of a cutting part 111‴ of a pouch 110"' is formed in an arc shape having an angle of 210 degrees.

### <Comparative Example 1>

The same process as in Manufacturing Example 1 was performed except that slit cutting is performed in a pouch to form a cutting part in a straight line shape.

### <Experimental Example 1>

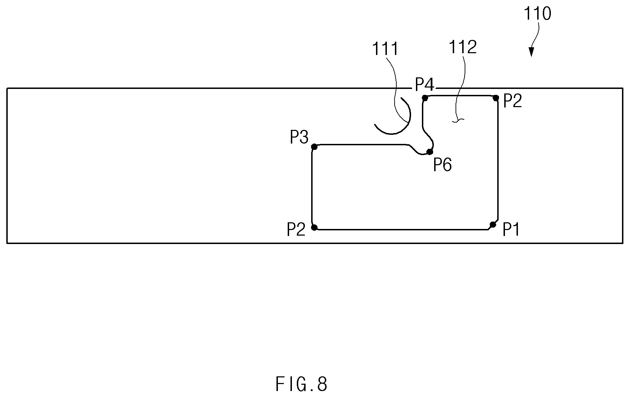

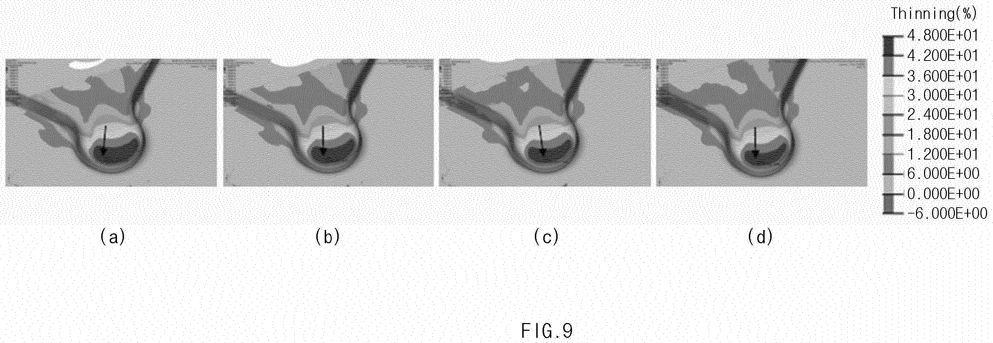

FIG. 8 is a plan view illustrating reference symbols of portions of the pouch that has undergone the cutting process and the forming process in the method for manufacturing the secondary battery according to an embodiment of the present invention, and FIG. 9 is an image illustrating a ratio of thinning at a portion P6 of the pouch illustrated in FIG. 8.

Here, FEA simulation was performed to measure a maximum thinning ratio of the pouch at each portion of the pouch illustrated in FIG. 8, and thus, the results were shown in Table 1 below. Then, the thinning ratio of the pouch at an inner corner portion P6 illustrated in FIG. 8 was measured, and an image of FIG. 9 was shown. Here, the thinning of the pouch at the inner corner portion P6 in Comparative Example 1, Manufacturing Example 1, Manufacturing Example 2, and Manufacturing Example 3 in the order of FIGS. 9(a), 9(b), 9(c), and 9(d) (see FIG. 8).

**[Table 1]**

| | Round Slit Cutting | Max, Thinning (%) | | | | | |
|---|---|---|---|---|---|---|---|
| | | P1 | P2 | P3 | P4 | P5 | P6 |
| Comparative Example 1 | 0° Straight | 26.32 | 33.67 | 34.01 | 22.74 | 35.12 | 46.31 |
| Manufacturing Example 1 | 120° | 26.63 | 33.98 | 34.23 | 22.50 | 35.01 | 45.80 |
| Manufacturing Example 2 | 180° | 25.90 | 33.05 | 34.06 | 22.40 | 34.87 | 45.29 |
| Manufacturing Example 3 | 210° | 25.99 | 34.30 | 34.72 | 22.84 | 34.50 | 44.46 |

Referring to Table 1, it is confirmed that an effect of thinning of the pouch in Manufacturing Examples 1 to 3, in which the arc slit cutting is performed, is improved compared to Comparative Example 1, in which the cutting part of the pouch is formed in the straight line shape. Particularly, it is seen that the thinning ratio of the pouch at the inner corner portion P6 of the pouch is 46.31% in Comparative Example 1, 45.80% in Manufacturing Example 1, 45.29% in Manufacturing Example 2, and 44.46% in Manufacturing Example 3. Here, it is seen that an amount of inflow from a portion P4 part to the portion P6 of the pouch increases, and thus, a thinning value of the pouch decreases to improve a residual amount of AI. That is, it is seen that an effect of the thinning of the pouch is improved by about 3.5% in Manufacturing Examples 1 to 3 when compared to that of the thinning of the pouch at the inner corner portion P6 of the pouch.

Furthermore, the scope of protection of the present invention will be clarified by the appended claims.

### [Description of the Symbols]

100: Secondary battery
110: Pouch
111, 111', 111", 111‴: Cutting part
112: Accommodating part
113: Inner corner portion
120: Electrode assembly
130: Electrode lead

## Claims

1. A method for manufacturing a secondary battery (100), the method comprising:
a cutting process of slit-cutting a portion of a pouch (110) to form a cutting part (111);
a forming process of forming an accommodating part (112) to accommodate an electrode assembly (120) in the pouch (110) after the cutting process; and
an accommodating process of accommodating the electrode assembly (120) in the accommodating part (112) of the pouch after the forming process,
**characterized in that** the electrode assembly has a bent shape,
**in that** the accommodating part (112) is formed in a bent shape in the forming process, and
**in that**, in the cutting process, the cutting part (111) is cut in an arc shape and formed at a portion of the pouch (110), which is adjacent to an inner corner portion (113) in the accommodating part (112) having the bent shape.

2. The method of claim 1, wherein the electrode assembly (120) is formed in a shape bent at a right angle, and
in the forming process, the accommodating part (112) is formed in a shape bent at a right angle.

3. The method of claim 1, wherein the electrode assembly (120) is formed to be bent in an "L" shape, and
in the forming process, the accommodating part (112) is formed to be bent in an "L" shape.

4. The method of claim 1, wherein, in the forming process, the accommodating part (112) is formed in a shape corresponding to the electrode assembly (120).

5. The method of claim 1, wherein, in the cutting process, the cutting part (111) is formed in an arc shape that is convex toward the inner corner portion (113) in the accommodating part (112) having the bent shape in the pouch (110).

6. The method of claim 5, wherein, in the cutting process, the cutting part (111) is formed as an arc-shaped cutting line in a plan view.

7. The method of claim 6, wherein, in the cutting process, the arc-shaped cutting line of the cutting part (111) is formed in an arc shape having an angle of 60 degrees to 285 degrees.

8. The method of claim 7, wherein, in the cutting process, the arc-shaped cutting line of the cutting part (111) is formed in an arc shape having an angle of 120 degrees to 210 degrees.

9. The method of claim 6, wherein, in the cutting process, the cutting part (111) is formed to be spaced a predetermined interval from the accommodating part (112).

10. The method of claim 1, wherein, in the forming process, the inner corner portion (113) of the pouch (110) is formed in a shape that is recessed in a direction of the accommodating part (112) in a plan view.

## Patentansprüche

1. Verfahren zum Herstellen einer Sekundärbatterie (100), das Verfahren umfassend:
einen Schneideprozess eines Schlitzschneidens eines Abschnitts eines Beutels (110) zum Bilden eines Schneideteils (111);
einen Bildungsprozess eines Bildens eines Aufnahmeteils (112) zum Aufnehmen einer Elektrodenanordnung (120) in dem Beutel (110) nach dem Schneideprozess; und
einen Aufnahmeprozess eines Aufnehmens der Elektrodenanordnung (120) in dem Aufnahmeteil (112) des Beutels nach dem Bildungsprozess,
**dadurch gekennzeichnet, dass** die Elektrodenanordnung eine gebogene Form aufweist,
dass der Aufnahmeteil (112) in einer gebogenen Form in dem Bildungsprozess gebildet wird, und
dass in dem Schneideprozess der Schneideteil (111) in einer Bogenform geschnitten und an einem Abschnitt des Beutels (110) gebildet wird, welcher benachbart zu einem inneren Eckabschnitt (113) in dem Aufnahmeteil (112) ist,
welcher die gebogene Form aufweist.

2. Verfahren nach Anspruch 1, wobei die Elektrodenanordnung (120) in einer Form gebildet ist, welche bei einem rechten Winkel gebogen ist, und
in dem Bildungsprozess der Aufnahmeteil (112) in einer Form gebildet wird, welche bei einem rechten Winkel gebogen ist.

3. Verfahren nach Anspruch 1, wobei die Elektrodenanordnung (120) dazu gebildet wird, in einer "L"-Form gebogen zu werden, und
in dem Bildungsprozess der Aufnahmeteil (112) dazu gebildet wird, in eine "L"-Form gebogen zu sein.

4. Verfahren nach Anspruch 1, wobei in dem Bildungsprozess der Aufnahmeteil (112) in einer Form gebildet wird, welche der Elektrodenanordnung (120) entspricht.

5. Verfahren nach Anspruch 1, wobei in dem Schneideprozess der Schneideteil (111) in einer Bogenform gebildet wird, welche konvex in Richtung des inneren Eckabschnitts (113) in dem Aufnahmeteil (112) ist, welcher die gebogene Form in dem Beutel (110) aufweist.

6. Verfahren nach Anspruch 5, wobei in dem Schneideprozess der Schneideteil (111) als eine bogenförmige Schneidelinie in einer Draufsicht gebildet wird.

7. Verfahren nach Anspruch 6, wobei in dem Schneideprozess die bogenförmige Schneidelinie des Schneideteils (111) in einer Bogenform gebildet wird, welche einen Winkel von 60 Grad bis 285 Grad aufweist.

8. Verfahren nach Anspruch 7, wobei in dem Schneideprozess die bogenförmige Schneidelinie des Schneideteils (111) in einer Bogenform gebildet wird, welche einen Winkel von 120 Grad bis 210 Grad aufweist.

9. Verfahren nach Anspruch 6, wobei in dem Schneideprozess der Schneideteil (111) dazu gebildet wird, um ein vorbestimmtes Intervall von dem Aufnahmeteil (112) beabstandet zu sein.

10. Verfahren nach Anspruch 1, wobei in dem Bildungsprozess der innere Eckabschnitt (113) des Beutels (110) in einer Form gebildet wird, welche in einer Richtung des Aufnahmeteils (112) in einer Draufsicht ausgenommen ist.

## Revendications

1. Procédé de fabrication d'une batterie secondaire (100), le procédé comprenant :
un processus de découpe consistant à entailler une partie d'une poche (110) pour former une partie de découpe (111) ;
un processus de mise en forme consistant à former une partie de logement (112) pour loger un ensemble électrode (120) dans la poche (110) après le processus de découpe ; et
un processus de logement consistant à loger l'ensemble électrode (120) dans la partie de logement (112) de la poche après le processus de mise en forme,
**caractérisé en ce que** l'ensemble électrode présente une forme courbée,
**en ce que** la partie de logement (112) est réalisée sous forme courbée au cours du processus de mise en forme, et
**en ce que**, au cours du processus de découpe, la partie de découpe (111) est découpée en arc et formée au niveau d'une partie de la poche (110), qui est adjacente à une partie d'angle interne (113) dans la partie de logement (112) présentant la forme courbée.

2. Procédé selon la revendication 1, dans lequel l'ensemble électrode (120) est réalisé sous forme courbée à angle droit, et
au cours du processus de mise en forme, la partie de logement (112) est réalisée sous forme courbée à angle droit.

3. Procédé selon la revendication 1, dans lequel l'ensemble électrode (120) est formé pour être plié en « L », et
au cours du processus de mise en forme, la partie de logement (112) est formée pour être pliée en « L ».

4. Procédé selon la revendication 1, dans lequel, au cours du processus de mise en forme, la partie de logement (112) est réalisée sous une forme correspondant à l'ensemble électrode (120).

5. Procédé selon la revendication 1, dans lequel, au cours du processus de découpe, la partie de découpe (111) est formée en arc qui est convexe vers la partie d'angle interne (113) dans la partie de logement (112) présentant la forme courbée dans la poche (110).

6. Procédé selon la revendication 5, dans lequel, au cours du processus de découpe, la partie de découpe (111) est réalisée sous forme de ligne de découpe arquée dans une vue en plan.

7. Procédé selon la revendication 6, dans lequel, au cours du processus de découpe, la ligne de découpe arquée de la partie de découpe (111) est formée en arc présentant un angle de 60 degrés à 285 degrés.

8. Procédé selon la revendication 7, dans lequel, au cours du processus de découpe, la ligne de découpe arquée de la partie de découpe (111) est formée en arc présentant un angle de 120 degrés à 210 degrés.

9. Procédé selon la revendication 6, dans lequel, au cours du processus de découpe, la partie de découpe (111) est formée pour être espacée de la partie de logement (112) d'un intervalle prédéterminé.

10. Procédé selon la revendication 1, dans lequel, au cours du processus de mise en forme, la partie d'angle interne (113) de la poche (110) est réalisée sous une forme qui est en retrait dans une direction de la partie de logement (112) dans une vue en plan.
